# EUROPEAN PATENT APPLICATION

(11) **EP 0 899 054 A1**
(43) Date of publication of application: **03.03.1999**
(21) Application number: 98304953.7
(22) Date of filing: 24.06.1998
(51) Int. Cl.: B23P 19/00, B27F 7/28, B21D 53/36, A47G 1/16

(54) **Automated assembly machine for picture hangers**

(30) Priority: 28.08.1997 US 924071
(71) Applicant: Craft, Inc., South Attleboro, MA 02703-0912 (US)
(72) Inventor: Roy, Armand E., Attleboro, Massachusetts 02703 (US)
(74) Representative: Phillips, Patricia Marie

(57) **Abstract**

An automated assembly apparatus (10) for receiving and processing a coiled strip of pre-manufactured hangers and attaching the finished processed hangers to the backing of a picture frame. The automated assembly apparatus (10) includes a dual head assembly (20,22) in communication with feeding means for advancing the coiled strip (38) of pre-manufactured hangers from a feeding wheel through a progressive tool of the head assemblies (20,22) for forming rosette fastening means in the strip of hangers and subsequent cutting separation of each hanger from the continuous strip. The separated hanger is then advanced to a staple head for automatically stapling the separated hanger to the backing of a picture frame.

## Description

### Background and Summary of the Invention

This invention relates generally to assembly machines and more particularly to an automated assembly apparatus for processing and attaching picture hangers to the back of a picture frame. The automated assembly machine uses coil-feed technology from a feeding wheel which feeds a continuous strip of pre-manufactured hangers into the heads of the assembly machine for processing and subsequent attachment of the finished hangers to the backing of a picture frame.

The instant invention is particularly effective for attaching saw-tooth hangers to the backing of a picture frame which provides a hanger by which the frame may be suspended. The hangers are partially pre-manufactured by progressive tooling into a continuous strip and then coiled around a specially structured feeding wheel or reel which may hold between 2,000 to 3,000 hangers. The strip of hangers is adapted to be neatly coiled around the feeding wheel, with each circular coil being spaced from its next adjacent coils. Specifically, each hanger of the continuous strip is identically constructed having corresponding structural spacing elements which allow the coils to be neatly stacked around the feeding wheel. More particularly, each hanger has two pairs of opposing dimple-like protrusions or protuberances which extend in opposite directions from the planar body of the hanger, a strengthening rib which extends along the top edge of the body of the hanger, and a living hinge centrally located across the body of the hanger. These elements of the hanger provide spacing points of contact between adjacently stacked hangers wrapped around the feeding wheel.

The coil strip of hangers are processed through the assembly machine and then each hanger is automatically attached to the backing of a picture frame. Processing of the strip of hangers includes formation of rosette fastening means, subsequent severing of the hanger from the pre-manufactured strip, and attachment of the separated hanger to the backing of a picture frame. The rosette fasteners are intentionally left out of the pre-manufactured strip of hangers in order to allow the strip to coil evenly around the feeding wheel. If the rosettes were formed during the pre-manufacturing process, they would be subject to deformation and dulling of the rosette points due to scratching of the rosette points against adjacent coils of the strip, which would also cosmetically detract from the hangers appearance. The strip of hangers further includes transverse slots formed between adjacent hangers for engagement with means for feeding the strip and for defining severing locations for separation of each hanger from the continuous strip during processing of the strip. The slots also make the strips more flexible for better and easier coiling of the strip around the reel.

The automated assembly machine of the instant invention provides an effective apparatus for attaching saw-tooth hangers of the type described above to a penetrable backing of a picture frame. Specifically, the apparatus is effective for medium to high volume manufacturers of poster frames, hanging art, and utility hanging frames for diplomas, certificates and signs. The machine provides a relatively quick and inexpensive way to install the hangers in both a vertical and horizontal orientation to a large number of desirable frame backings. The machine effectively utilizes coil-feed technology to continuously feed a strip of the saw- tooth hangers into the heads of the assembly machine which forms rosette fastening means and separates the hanger from the pre-manufactured strip. The separated hanger is then advanced to a staple head which staples the processed hanger into the frame backing board. Specifically, the stapling station applies the separated hanger to the backing board in such a manner that the rosette points spread outwardly within the backing board of the frame so as not to penetrate through the board providing a neat, safe, and attractive attachment of the processed hanger to the backing of the picture frame.

The instant invention is directed to an automated assembly apparatus for receiving and processing a coiled strip of pre-manufactured hangers and attaching the finish processed hangers in both a vertical and horizontal orientation to the backing of a picture frame, so that a rectangularly shaped frame may be hung with its longer dimension either horizontally or vertically disposed. The machine comprises a dual head assembly, with each head having its own feeding mechanism for advancing the coiled strip of pre-manufactured hangers from a feeding wheel through a small progressive tool for forming rosette fasteners in the hangers and subsequent separation of the hangers from the continuous coil strip. The separated hanger is then advanced to a staple head, wherein insertion of a frame backing between the head assemblies trips an air cylinder for stapling the hanger to the picture frame backing. The machine further includes a frame for supporting the dual head assembly, the frame having a track and rail arrangement for linear sliding adjustment of the first and second head assemblies along the frame for different size picture backings. The rail of the frame has a scale mounted thereon for calibration of the separated hanger to a designated point on the picture frame backing board. The frame further includes a fencing element mounted thereon for square orientation of the picture frame between the adjusted head assemblies of the assembly machine.

Although the machine has the capability of simultaneously attaching two hangers to adjacent edges of a frame backing, it will be understood that where the frame is square, only one hanger need be attached to the backing. Control means associated with the machine permit the machine to selectively and simultaneously attach two hangers to adjacent edges of the backing, or alternatively, where the frame is square, to attach only one hanger to the backing.

Accordingly, among the several objects of the instant invention are: the provision of an assembly machine that is capable of receiving a continuous coiled strip of pre-manufactured hangers from a specially structured feeding wheel; the provision of an assembly machine which forms rosette fastening means in the continuous strip of hangers; the provision of an assembly machine which separates the processed hangers from the continuous coiled strip; the provision of an assembly machine which staples the separated hangers to the backing of a picture frame at two adjacent edges of the backing or at one edge only; and the provision of an assembly machine which can perform the above functions in a cost efficient and time effective manner.

Other objects, features and advantages of the invention shall become apparent as the description thereof proceeds when considered in connection with the accompanying illustrative drawings.

### Brief Description of the Drawings

In the drawings which illustrate the best mode presently contemplated for carrying out the present invention:
FIG. 1 is a perspective view of the assembly machine of the instant invention;
FIG. 2 is a front elevational view of the feed wheel of the assembly machine of the instant invention, with a portion broken away for purposes of illustration;
FIG. 3 is an edge view showing the relation of the hangers stacked on the feeding wheel;
FIG. 4 is a perspective view of a part of the pre-manufactured strip of hangers;
FIG. 5 is a top view of the strip of hangers shown in FIG. 4;
FIG. 6 is a side elevational view of the head portion of the assembly machine of the instant invention;
FIG. 7 is a partial front view of the head portion of the assembly machine showing the sliding track assembly;
FIG. 8 is a perspective view of the dual head portions of the assembly machine showing both the continuous strip of hangers and the finished cut hanger;
FIG. 9 is an exploded perspective view of one of the head portions of the assembly machine of the instant invention.
FIG. 10 is a cross-sectional view taken along line 10--10 of FIG. 8; and
FIG. 11 is the same view illustrated in FIG. 10 showing the progressive tool in motion.

### Detailed Description of the Preferred Embodiment

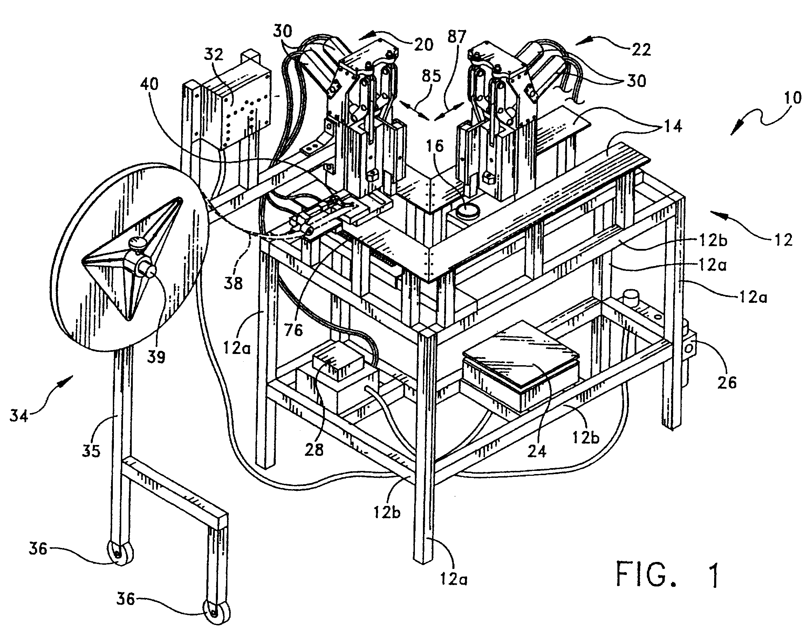

Referring now to the drawings, and more particularly to FIG. 1, the automated assembly apparatus of the instant invention is shown and generally indicated at 10. As will hereinafter be more fully described, the assembly machine of the instant invention is operable for processing a pre-manufactured coiled strip of hangers and attaching the finished processed hangers to the backing of a picture frame.

The assembly machine comprises two heads, each having its own coil pay-off system, an electrical and pneumatic control system, and a base and frame assembly for supporting these elements of the assembly machine. The frame of the assembly machine generally indicated at 12 comprises vertical support legs 12a and horizontal support arms 12b for supporting the elements of the assembly machine. The frame 12 includes a pair of adjacently positioned L-shape base boards 14 which extend horizontally across the top portion of the frame 12 for positioning of the picture frame backing on which the picture hanger is to be attached. A stapling pad 16 and guide block 18 are located at the top portion of the frame 12. The stapling pad 16 provides a secure surface for stapling the processed picture hangers to the backing of the picture frame. The guide block 18 provides a flat channel by which the pre-manufactured strip of hangers may be fed into the assembly machine 10, the guide block will be described in greater detail as the description of the invention proceeds. The two heads of the assembly machine 20 and 22 are supported at the top portion of the frame 12 between L-shaped base boards 14 and the electrical and pneumatic control system which controls operation of the heads of the assembly machine are supported at the bottom portion of the frame. Specifically, a programmable logic controller 24 is computer driven for sending commands to the heads 20 and 22 of the assembly machine. The machine is driven by pressurized air which travels through a lubricator/regulator 26 and into manifold valve banks 28 for directing the correct pressure of oil sprayed air to the appropriate air cylinders 30. A control panel 32 is located at the top portion of the frame 12 for manual and automatic adjustment of operation. The coil pay-off system 34 is supported by frame 35 which is mounted on wheels 36 for following the relative positioning of the heads 20 and 22 of the machine. Although only one pay off system 34 is illustrated in the drawings, it will be understood that each of the heads 20, 22 have their own identical pay-off system 34. In fact, the operation of each head is identical and simultaneous when the machine has been set to attach two hangers to adjacent edges of the backing.

Generally, the assembly machine 10 uses coil feed technology wherein a continuous strip of pre-manufactured hangers 38 are fed into the assembly machine 10 via a feeding mechanism. The feeding mechanism uses an air cylinder 30, which is operated by a pressurized air source and a feed pawl 40 which interacts with slots 42 in the strip 38 for advancing the coils 34 through the heads 20 and 22 of the assembly machine 10. The arrangement is such that a progressive tool in each assembly head forms rosette fastening means in the hangers, and subsequently staples the rosetted hangers into the picture frame backing. As discussed, a programmable logic controller 24 is operable for generating all the proper signals to the valves, which in turn activate the appropriate cylinders. Inputs from various proximity, reed and mechanical switches are interpreted by the programmable logic controllers program. A manual operation is also provided for initial feeding of the coil as well as trouble-shooting.

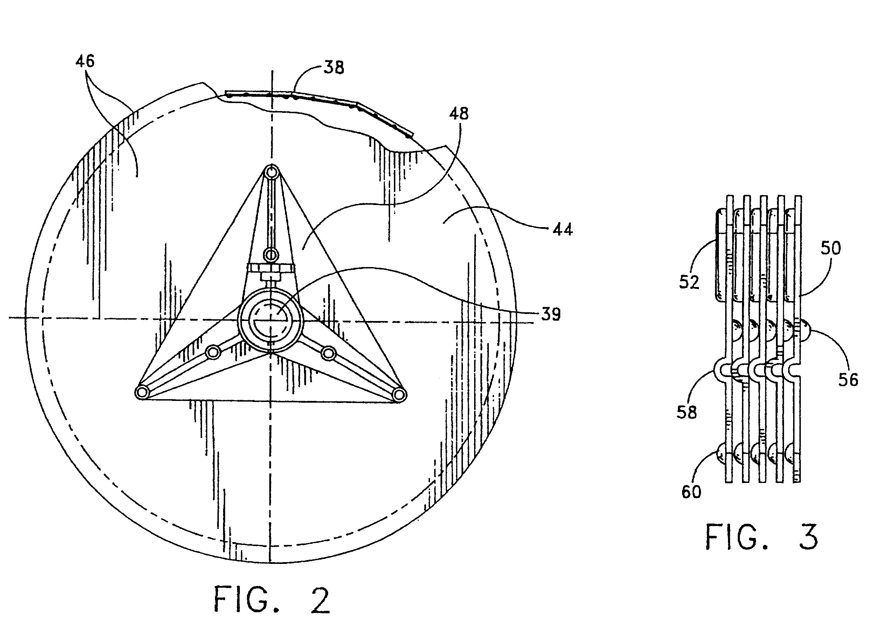

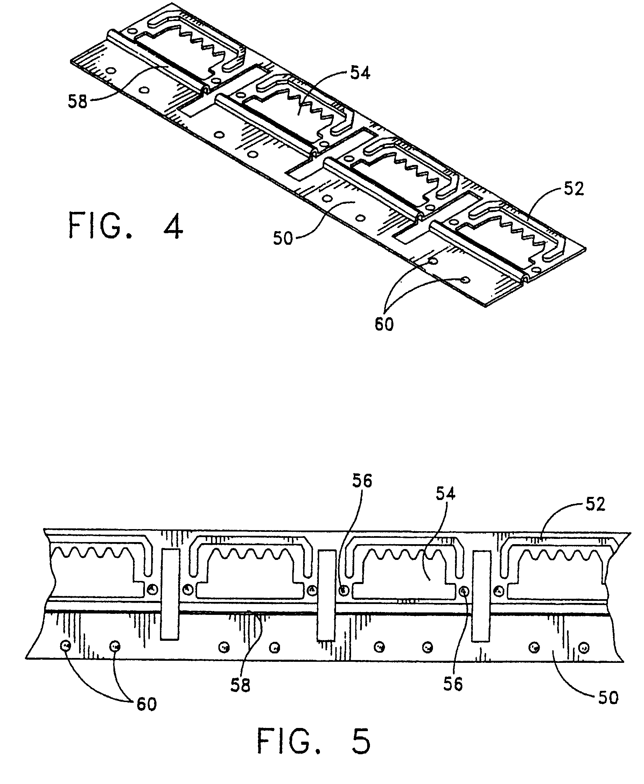

Referring now to FIGS. 2-5, the coil pay-off system 34 includes a feeding wheel 44 which retains the coiled strip of pre-manufactured hangers 38 stacked around a shaft 39 of the feeding wheel 44. The feeding wheel 44, best shown in FIG. 2, comprises two substantially flat rounded panel members 46 which are clamped about the centrally positioned shaft 39 by a pair of adjustable clamping devices 48 which engage the outer surface of each panel member 46 to maintain them in a spaced parallel relation with each other defining a channel for receiving the strip of hangers 38. After the hangers 38 are coiled around the feeding wheel 44, the wheel may be shrink-wrapped for easier and more efficient shipping of the pre-manufactured hangers 38 to any facility having one of the machines 10. The panels of the feeding wheel 44 are preferably fabricated from inexpensive cardboard material which may be discarded after the coil strip of hangers 38 has been exhausted from the feeding wheel 44. The wheel 44 acts as a type of spool for unwinding the coiled strip of hangers 38 that are stacked around the wheel into the heads 20 and 22 of the assembly machine 10. As shown in FIG. 2, a portion of the wheel 44 is broken away revealing the strip of hangers 38 in stacked relation around the feeding wheel. The resiliency of the strip 38 allows the strip to bend around the wheel 44 without the hangers becoming detached from one another. As most clearly shown in FIG. 1, the wheels 44 are mounted adjacent the head assemblies 20 and 22 enabling the strips of hangers 38 to pass unobstructedly from each wheel 44 to the heads 20 and 22 of the assembly machine 10. As mentioned previously in the description, the feeding wheels 44 are mounted on a frame 35 which permits each wheel to follow the relative positioning of its respective assembly head 20 or 22.

Referring now to FIG. 3, the strip of hangers 38 are shown in their stacking relation as they coil around feed wheel 44. Each hanger comprises a body portion 50 having corresponding structural spacing elements in alignment with the same elements of the body portion of adjacently stacked hangers. The spacing elements provide contact points between body portions 50 of adjacently stacked hangers to allow the hangers 38 to be neatly coiled around the feeding wheel 44.

Referring to FIGS. 3-5, the spacing elements of the body 50 of each hanger are more clearly identified. An integrally formed strengthening rib 52 extends along the top edge of the body 50 of the hanger 38 for stronger support of larger type picture frames. Below the strengthening rib 52 is a saw-tooth bracket opening 54 for receiving support means from the location where the frame is to be suspended. The teeth of the bracket 54 engage the support means, i.e., a nail or the like, so as to better maintain the frame in the desired hanging location. A first pair of oppositely disposed protrusions 56 extend from the body 50 of the hanger 38 in an opposite direction from that of the strengthening rib 52, the protrusions 56 functioning to bias the hanger 38 away from the backing of the frame for easier insertion of hanger support means in the saw-tooth bracket 54 of the hanger 38. A living hinge 58 extends across the center of the body 50 of the hanger 38, which hinge has no utility other than to allow the strip of hangers 38 to be compatible with the instant assembly machine 10 as well as other similarly constructed assembly machines. A second pair of oppositely disposed protrusions 60 extend from the body 50 of the hanger 38 in an opposite direction from that of the first pair of protrusions 56 and provide further contact spacing points for the hangers 38 stacked around the feeding wheel 44. As best shown in FIG. 3, these structural spacing elements are aligned with the same elements of adjacently stacked hangers, allowing the hangers to stack neatly around the feeding wheel.

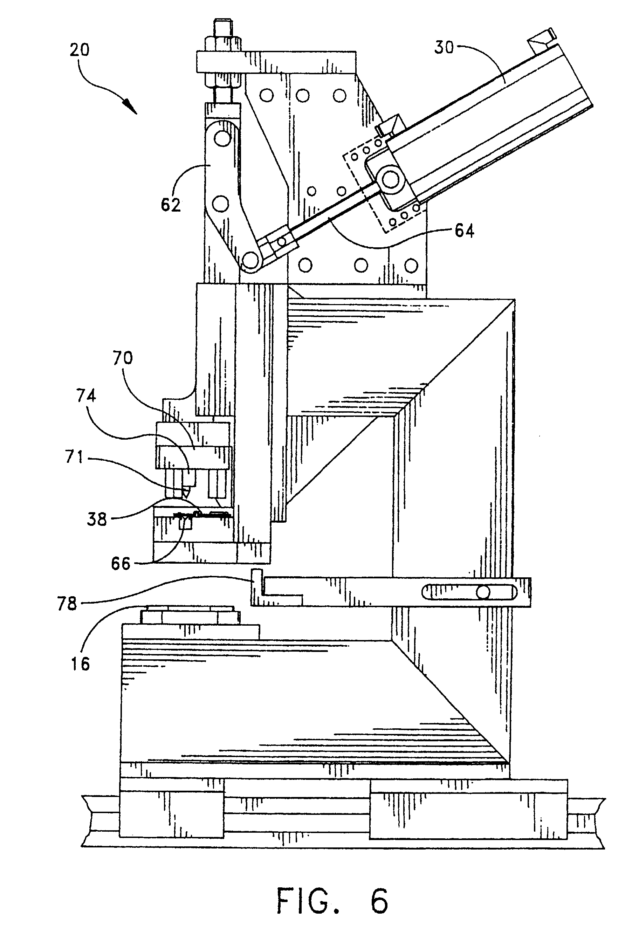

Referring now to FIG. 6, one of the heads of the assembly machine is shown and generally indicated at 20. Pneumatic cylinders 30 operated from the control box 32 drive the head 20 of the assembly machine 10 for processing the strip of hangers 38 as they are advanced through the assembly machine 10. The cylinders 30 include an actuating link 62 and piston 64 which are in communication with the progressive tool of the head 20 for formation of rosette fasteners 66 in the pre-manufactured strip 38 and severing of the processed hanger 68 from the strip 38. Specifically, the heads 20 and 22 of the assembly machine 10 each comprise a progressive tool 70 which includes three rosette punching tools 71, 72, and 73 mounted therein for piercing the bottom edge of the body 50 of the hanger 38 for forming the rosette fasteners 66. Adjacent the rosette punching tools 71-73 are a pair of oppositely disposed cutting tools 74 and 75 for separating the processed hangers from the continuous coil strip 38 after the rosettes 66 are formed therein. Both heads 20 and 22 of the assembly machine 10 perform the same function, i.e., although the first head 20 applies the processed hanger to one edge of the backing and the second head 22 simultaneously applies the processed hanger to an adjacent edge of the picture frame backing. Both heads 20 and 22 are slidably mounted for linear adjustment along the frame 12 of the assembly machine for adjustment of the heads to different size picture frames. A scale 76, i.e., a measuring tape or the like, is mounted on the slidable adjustment means and calibrated to designate the position of the top edge of the hanger from the center line of the picture frame backing. A fence 78 is mounted on the frame 12 of the machine 10 for effecting square orientation of the picture frame backing, not shown, between the heads 20 and 22 of the assembly machine 10.

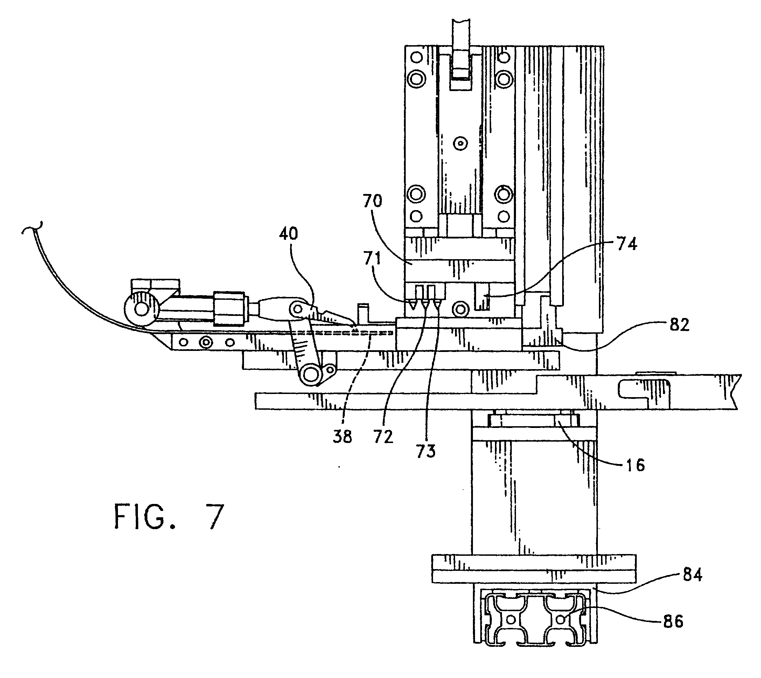

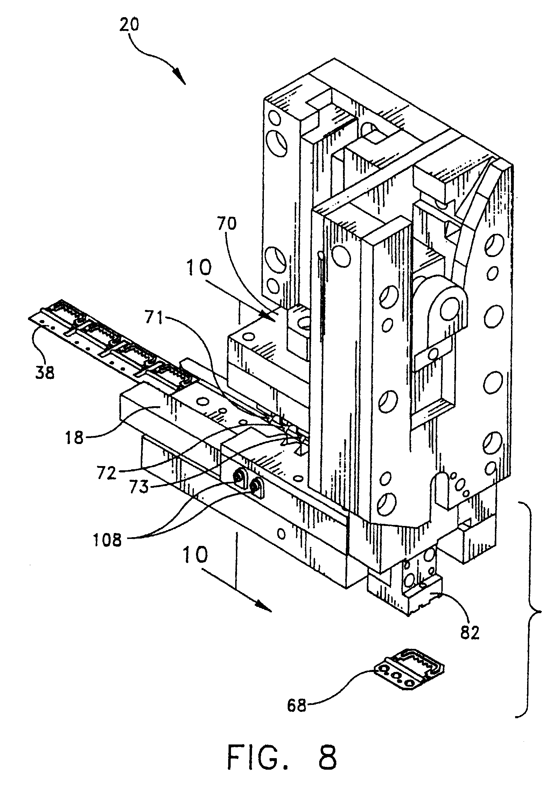

Referring to FIGS. 7 - 8, advancement of the pre-manufactured strips of hangers 38 through the heads 20 and 22 of the assembly machine 10 is more clearly depicted. The feeding mechanism comprises a feed pawl 40 which interacts with slots 42 formed in the strip 38 to advance the strip of hangers into the heads 20 and 22 of the assembly machine 10. More specifically, the tip of the feed pawl 40 engages the slots 42 formed in the strip 38 to controllably advance the strips of hangers, one hanger at a time, into the heads of the assembly machine 10. As the strips 38 enter the progressive tool 70 of the head assemblies, the three rosette punching tools 71-73 are actuated to pierce the body 50 of the hanger 38 and form the rosette 66 fasteners. Substantially simultaneously, the pair of oppositely positioned cutting tools 74 and 75 are actuated and forced downwardly to cut the processed hangers at slot locations 42 thus severing the hangers from their respective pre-manufactured strip 38. The separated hangers 68 are then advanced to the staple heads 82 where they are applied to the backing board of a picture frame. Specifically, each separated hanger 68 is pushed to its respective stapling attaching position by the advancement of strip 38 by feed pawl 40. As previously mentioned, the heads 20 and 22 of the assembly machine 10 are slidably mounted for linear adjustment along the frame 12. Specifically, the frame 12 includes a track 84 and rail 86 arrangement for sliding of each head along the frame to accommodate different size picture frames. As most clearly shown in FIG. 1, the first head slides in a direction indicated by arrow 85 and the second head slides in a direction indicated by arrow 87. Generally, the heads slide towards each other for fitting smaller size picture frames and away from each other for fitting larger size picture frames.

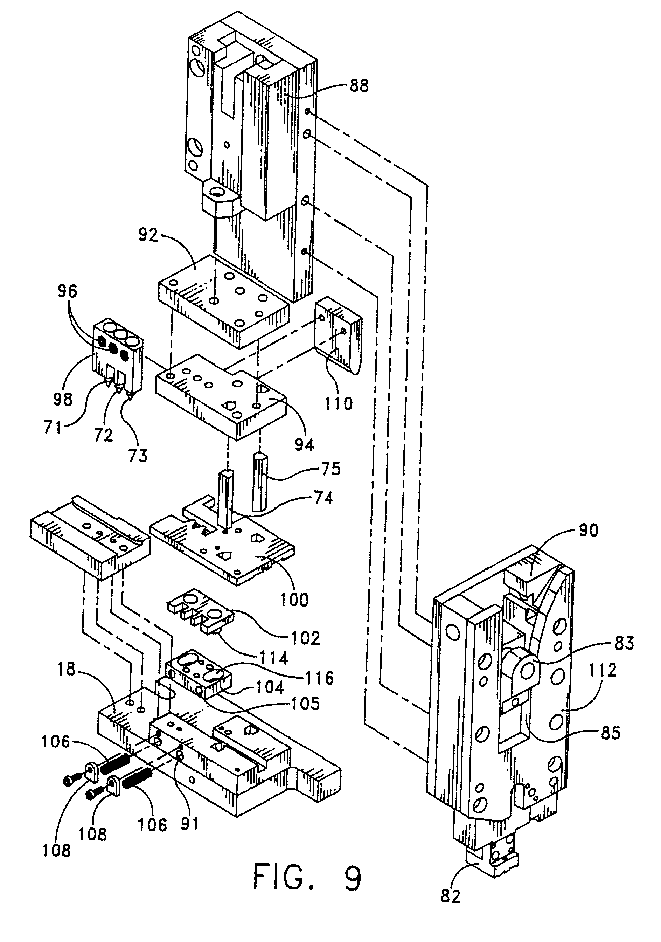

Referring to FIGS. 9-11, the components of the head portions 20 and 22 of the assembly machine 10 are more clearly identified. Generally, FIG. 9 illustrates the top portion 88 of the assembly head 20 (it being understood that head 22 is exactly the same), the stapling portion 90 of the assembly head 20, which is attached to the side of the top portion 88, component plates of the progressive tool 70, which are attached beneath the top portion 88 of the assembly head 20 and a guide block 18 attached to the top of a guide plate 89 for feeding the strip of hangers 38 through a channel on a flat plane into the progressive tool 70 of the assembly head 20. Specifically, the component plates of the progressive tool 70 include an attachment plate 92 for attaching the progressive tool 70 to the top portion 88 of the assembly head 20, a tooling plate 94 having corresponding apertures formed therein for receiving the cutting 74-75 and rosette 71-73 tools, releasable pins 96 running transversely through the body 98 of the rosette tool for replacement of rosette punching pins 71-73, a stripper plate 100 attached beneath the tooling plate 94 having formations on the bottom surface thereof to correspond with the structural spacing elements of the strip of hangers 38, and cam plates 102 and 104 mounted by springs 106 at a corner of the guide block 18 wherein the springs 106 are received through corresponding apertures 91 in the guide block 18 and 105 in the cam plate 104 and butt up against sleeves 114, being retained therein by keepers 108. Cam plate 102 is spring biased to an unlocked position, however, when it is actuated by cam member 110, sleeves 114 slide in oblong holes 116 for movement of the cam plates between a first normally biased unlocked position whereby the strip of hangers and the separated hanger may be advanced to the staple head 82, to a second locked position wherein the hangers are locked within the guide block 18 for rosette forming. The staple portion 90 of the assembly head 20 includes a stapling stem and stapling head 82 which are mounted for longitudinal movement within the body 112 of the stapling portion 90 of the assembly head. The longitudinal movement of head and stem 82 is limited by lug 83 carried by stem 82 and slot 85 in body 112. The bottom surface of the stapling head 82 is magnetic to maintain the separated hanger 68 in proper position on head 82 before attachment to a backing board. Specifically, when the staple head 82 is actuated, the rosette fasteners 66 spread outwardly into the frame backing and the hanger 68 is transferred from the bottom of the staple head 82 to the frame backing.

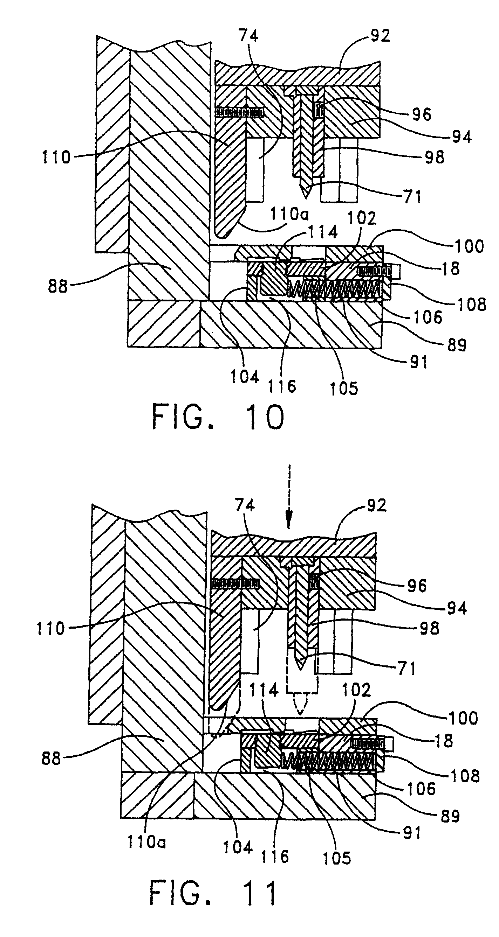

Figures 10 and 11 more clearly show the cam action taking place in the progressive tool 70 of the assembly heads 20 and 22. Specifically, when the machine is actuated, a slanted edge 110a of the cam member 110 engages stripper plate 100 which forces sleeves 114 of cam plate 102 to move within oblong holes 116 of cam plate 104 biasing this special sliding cam plate 102 to a locked position whereby the hangers are secured in the rosette fastening station. When cam member 110 moves back upwardly, the special sliding cam plate 102 moves back to its normal unlocked position by the action of springs 106 whereby the strip 38 and separated hanger 68 are free to advance pursuant to actuation of feed pawl 40.

In use, a picture frame backing is inserted between fences 118 mounted on the frame 12 of the assembly machine for square orientation of the picture frame between the heads 20 and 22 of the assembly machine 10. Next, the heads 20 and 22 are adjusted to accommodate the particular size picture frame. Each fence 118 has a switch (not shown) protruding therefrom and when both switches are forced inwardly by insertion of the picture frame, air cylinders are tripped which perform the functions of the assembly machine. First, the progressive tools are forced downwardly forming rosettes in the strips of hangers locked in the sliding cam plates 102 of the guide blocks 18, and simultaneously, a finished hanger, which will always be magnetically held at the bottom of the staple head, is pressed into the picture frame backing. Second, the progressive tool moves back upwardly, which slidably releases the cam plate 104 from the locked position to an unlocked position which permits advancement of the processed hanger to the stapling head while reloading the strip at the rosette station.

As previously described, where the picture frame is square, only one of the heads 20 and 22 need operate. This is achieved by operation of control panel 32 to disarm one of the switches that are engaged by the edges of the backing when the latter is properly positioned within the fence 118.

It can therefore be seen that the instant invention provides for an automatic assembly machine which effectively processes and attaches hangers to the back of picture frames. The machine uses coil feed technology for advancing a continuous strip of pre-manufactured hangers stacked around a feeding wheel through a progressive tool of the heads of the assembly machine for formation of rosette fastening means and subsequent cutting separation of the processed hanger from the continuous strip. The machine is then operable for attaching the separated hanger to the backing board of a picture frame, either singly, or alternatively, dual heads permit two hangers to be simultaneously attached to adjacent edges of the backing. An important feature of the invention is the fact that the progressive tool comprises a special sliding cam plate which allows for the strip of hangers to be processed in a time effective manner. For these reasons, the instant invention is believed to represent a significant advancement in the art which has substantial commercial merit.

While there is shown and described herein certain specific structure embodying the invention, it will be manifest to those skilled in the art that various modifications and rearrangements of the parts may be made without departing from the spirit and scope of the underlying inventive concept, and that the same is not limited to the particular forms herein shown and described except insofar as indicated by the scope of the appended claims.

## Claims

1. An automated assembly apparatus for picture hangers comprising:
a first frame assembly supporting a rotatable feeding wheel having a continuous strip of partially finished hangers coiled therearound;
a second frame assembly having a head assembly mounted thereon;
means for feeding said strip to said head assembly;
means carried by said head assembly for forming rosette fasteners in said hangers;
means for severing the rosetted fasteners from said strip; and
means for automatically attaching said severed rosetted hanger to the backing of a picture frame.

2. The apparatus of claim 1 wherein said second frame assembly has two identical head assemblies mounted thereon, each head assembly having its own feeding wheel associated therewith, whereby the apparatus can simultaneously attach two hangers to different locations on said backing.

3. The apparatus of claim 2 wherein said head assemblies are slidably mounted on said second frame assembly for linear adjustment to accommodate different size picture frames.

4. The apparatus of claim 3 wherein said first frame assemblies are mounted on rollers so as to readily permit each feed wheel to be properly positioned relative to its respective head assembly.

5. The apparatus of claim 3 further comprising electrical and pneumatic control means selectively operable to cause both head assemblies to operate simultaneously, or in the alternative, to cause only one of the head assemblies to operate.

6. In the apparatus of claim 1, said head assembly comprising a progressive tool having a sliding cam plate which is cammed to a locking position when the tool forms the rosettes to securely hold the strip, but which automatically moves to a non-locking position when the tool is inoperative to permit advancement of the strip.

7. A method for attaching picture hangers to the backing of picture frames comprising the following steps:
a. coiling a continuous strip of partially finished hangers around a rotatable feed wheel;
b. incrementally feeding the strip to a first station where rosettes are formed in said hangers;
c. severing the rosetted hanger from the strip; and
d. advancing the severed rosetted hanger to a second station where it is attached to a picture frame backing.

8. The method of claim 7 wherein two continuous strips of partially finished hangers are simultaneously fed to two identical first stations contained in the same apparatus, whereby two hangers are simultaneously rosetted, severed, and attached to the picture frame backing.
